# EUROPEAN PATENT APPLICATION

(11) **EP 2 874 050 A1**
(43) Date of publication of application: **20.05.2015**
(21) Application number: 14156856.8
(22) Date of filing: 26.02.2014
(51) Int. Cl.: G06F 3/041, G06F 3/044

(54) **Touch panel**

(30) Priority: 15.11.2013 TW 102141632
(71) Applicant: InnoLux Corporation, Chu-Nan, Miao-Li 350 (TW)
(72) Inventor: Hsu, Yu-Chun, 350 Miao-Li County (TW); Huang, Peng-Cheng, 350 Miao-Li County (TW)
(74) Representative: Von Kreisler Selting Werner - Partnerschaft von Patentanwälten und Rechtsanwälten mbB

(57) **Abstract**

A touch panel comprises a substrate and a conductive mesh pattern. The conductive mesh pattern is disposed on the substrate and comprises a wire area. The wire area has a plurality of wires. The wires intersect along a first direction and a second direction to form a plurality of intersections, a side of each of the intersections is extended to form a protrusion, and the intersection and the protrusion form a conductive connecting region.

## Description

### BACKGROUND

### Technical Field

The invention relates to a touch panel.

### Related Art

Many kinds of touch input technologies have been widely applied to electronic products. For example, the mobile phone and tablet computer both use a touch panel as an input interface. This kind of input interface provides the user an intuitive operation, so the user can directly contact the surface of the touch panel by a finger or stylus to give instructions, or move on the surface of the touch panel to select or operate the desired object or input characters.

A conventional touch panel includes at least a substrate and a conductive pattern, circuit layer, insulating layer and flexible printed circuit board (FPCB) pattern formed on the substrate. Generally, the conductive pattern is made by indium tin oxide (ITO) that is transparent and electrically conductive. However, when the size of the touch panel is getting larger, the area of the ITO on the substrate also increases and the surface resistance of the conductive pattern formed by ITO will rises a lot accordingly, so that the signal transmitted through the conductive pattern will be attenuated considerably. Therefore, a rear-end signal processor can not rapidly and precisely determine the position of the touch input, and the signal can't be processed and manipulated correctly.

Accordingly, the design of metal mesh is currently presented to replace the conventional ITO material of the touch panel so that the signal attenuation resulted from the large-area ITO can be avoided by using the metal material with its electrical conductivity. Besides, the metal material, in comparison with the ITO, has better flexibility so as to be applied to the flexible touch panel. However, due to the opaque property of the metal material, the aperture ratio will be decreased. Hence, for avoiding the decrement of the aperture ratio, the circuit of the metal mesh is made thinner and thinner. But, when the metal mesh is made by using the lithography etching technique, the metal mesh is often broken at the intersection due to the excessive etching.

Therefore, it is an important subject to provide a metal mesh touch panel that can reduce the signal attenuation during the transmission and can thus determine the touch input position precisely and rapidly without the problem of wire disconnection.

### SUMMARY

In view of the foregoing subject, an objective of the invention is to provide a touch panel that can reduce the signal attenuation during the transmission and can thus determine the touch input position precisely and rapidly.

To achieve the above objective, a touch panel according to the invention comprises a substrate and a conductive mesh pattern. The conductive mesh pattern is disposed on the substrate and comprises a wire area. The wire area has a plurality of wires. The wires intersect along a first direction and a second direction to form a plurality of intersections, a side of each of the intersections is extended to form a protrusion, and the intersection and the protrusion form a conductive connecting region. For the section of the same direction, the wire width of the conductive connecting region is greater than the wire width of the wire, and the normal vector of the section is substantially parallel to the extending direction of the wire.

To achieve the above objective, a touch panel according to the invention comprises a substrate and a conductive mesh pattern. The conductive mesh pattern is disposed on the substrate and comprises a wire area. The wire area has a plurality of wires. The wires intersect along a first direction and a second direction to form a plurality of intersections, a side of each of the intersections is extended to form a protrusion, and the intersection and the protrusion form a conductive connecting region. The conductive connecting region has a lower surface near the substrate, an upper surface opposite to the lower surface, and a side surface connecting the upper and lower surfaces, the upper surface has a first roughness, the side surface has a second roughness, the first roughness is greater than the second roughness, the first roughness is denoted by the height difference between the highest and lowest points of the upper surface within a unit length, and the second roughness is denoted by the height difference between the highest and lowest points of the side surface within a unit length.

To achieve the above objective, a touch panel according to the invention comprises a substrate and a conductive mesh pattern. The conductive mesh pattern is disposed on the substrate and comprises a wire area. The wire area has a plurality of wires. The wires intersect along a first direction and a second direction to form a plurality of intersections, a side of each of the intersections is extended to form a protrusion, and the intersection and the protrusion form a conductive connecting region. The conductive connecting region has a lower surface near the substrate, an upper surface opposite to the lower surface, and a side surface connecting the upper and lower surfaces, for a section of the conductive connecting region, the wire width of the upper surface is a first wire width, the wire width of the lower surface is a second wire width, a third wire width is between the upper surface and the lower surface, and the third wire width is less than the first wire width and less than the second wire width.

### BRIEF DESCRIPTION OF THE DRAWINGS

The invention will become more fully understood from the detailed description and accompanying drawings, which are given for illustration only, and thus are not limitative of the present invention, and wherein:
FIGS. 1A and 1B are schematic diagrams of a touch panel according to a embodiment of the invention;
FIG. 2A is a schematic sectional diagram taken along the line A-A' in FIG. 1B;
FIG. 2B is a schematic sectional diagram taken along the line B-B' in FIG. 1B;
FIGS. 3A to 3H are schematic diagrams showing some exemplificative variations of the conductive connecting region according to the invention;
FIG. 4 is a schematic diagram of a touch panel according to another embodiment of the invention;
FIG. 5 is a schematic diagram of a touch panel according to another embodiment of the invention; and
FIG. 6 is a schematic diagram of a touch panel according to another embodiment of the invention.

### DETAILED DESCRIPTION

The present invention will be apparent from the following detailed description, which proceeds with reference to the accompanying drawings, wherein the same references relate to the same elements.

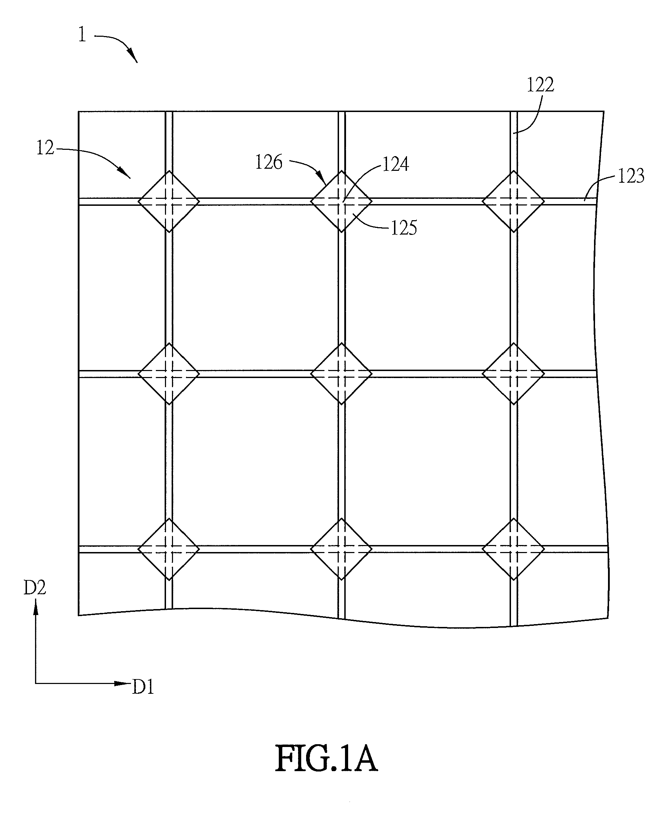

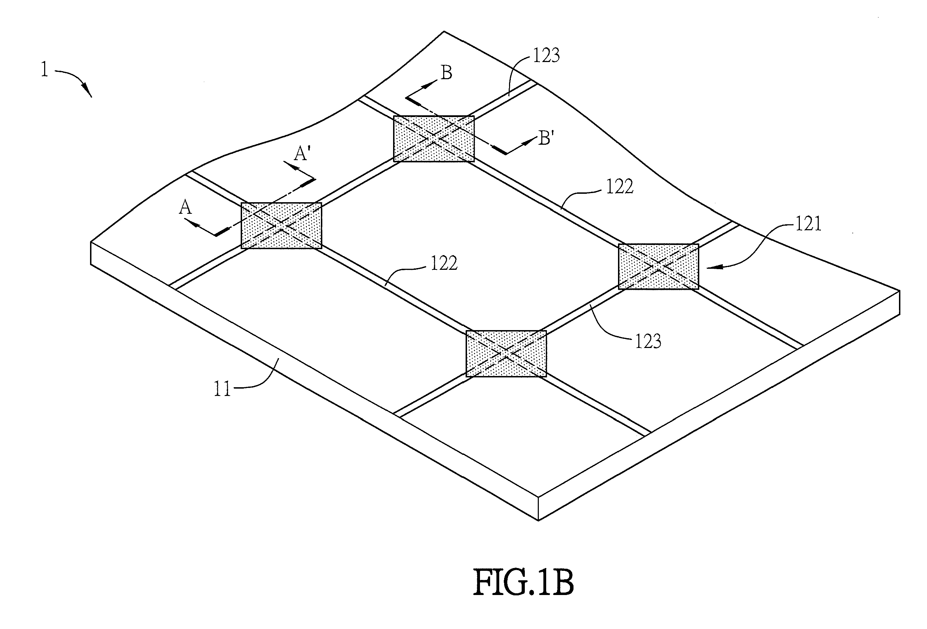

FIGS. 1A and 1B are schematic diagrams of a touch panel 1 according to an embodiment of the invention. As shown in FIGS. 1A and 1B, the touch panel 1 includes a substrate 11 and a conductive mesh pattern 12. In this embodiment, the substrate 11 is a transparent substrate, such as a glass substrate or a transparent film, and favorably can be made by polyimide (PI) or polyethylene terephthalate (PET). The substrate 11 of this embodiment is a transparent, light, thin and flexible substrate.

The conductive mesh pattern 12 is disposed on the substrate 11 and has electrical conductivity. In this embodiment, the conductive mesh pattern 12 is made by metal, such as copper. For example, a copper film is formed on the substrate 11 by sputtering or evaporation, and then the processes of exposure, development and etching are implemented to form the conductive mesh pattern 12. To be noted, in other embodiments, the conductive mesh pattern 12 can be made by other kinds of metal or graphene and can be formed on the substrate 11 by other kinds of processes. In this embodiment, the conductive mesh pattern 12 is formed into a single-layer conductive pattern by implementing the lithography etching process to a single-layer metal, and has the thickness of 0.01µm ∼ 20µm. Considering the requirement and design of the product and the difference of the adopted process, the thickness of the conductive mesh pattern 12 is favorably 0.1µm ∼ 10µm or 0.2µm ∼ 10µm.

The conductive mesh pattern 12 includes a wire area 121, which includes a plurality of first wires 122 and a plurality of second wires 123. The first wires 122 are disposed side by side on the surface of the substrate 11 along a first direction D1, and each of the first wires 122 is extended along a second direction D2. The second wires 123 are disposed side by side on the surface of the substrate 11 along the second direction D2, and each of the second wires 123 is extended along the first direction D1. As an embodiment, the first wire 122 can be extended along Y-axis direction while the second wire 123 is extended along X-axis direction. Otherwise, the first wire 122 is extended along X-axis direction while the second wire 123 is extended along Y-axis direction, or the first wire 122 is extended along the direction of 45° from Y-axis direction while the second wire 123 is extended along the direction of 45° from X-axis direction. However, the invention is not limited thereto. The first wires 122 and the second wires 123 intersect to form a plurality of intersections 124, and a side of each of the intersections 124 is extended to form a protrusion 125. The intersection 124 and the protrusion 125 form a conductive connecting region 126.

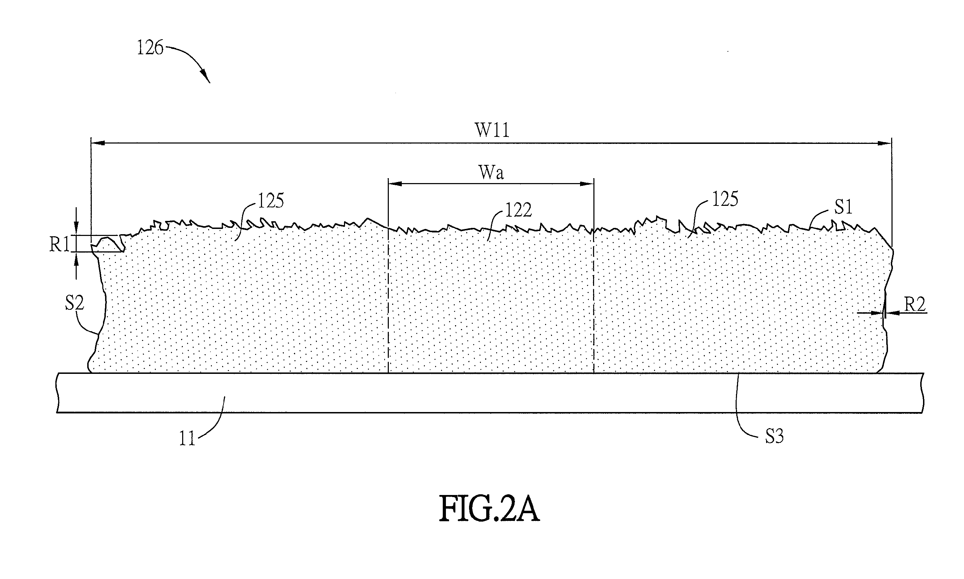

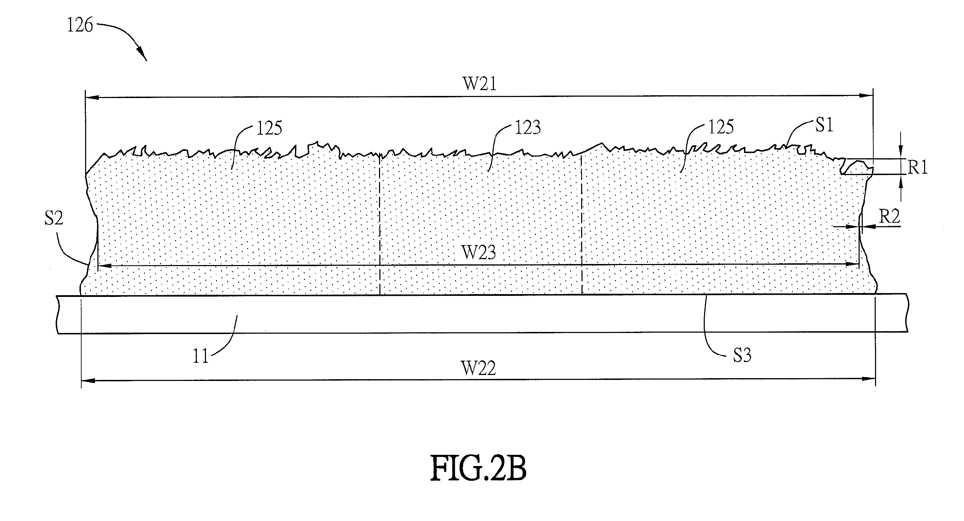

FIG. 2A is a schematic sectional diagram taken along the line A-A' in FIG. 1B. As shown in FIG. 2A, in this embodiment, the section taken along the line A-A' is regarded as a first section, the wire width of the upper surface S1 of the first section of the conductive connecting region 126 is regarded as a first wire width W11, and the first wire width W11 is substantially greater than the wire width Wa of the first section of the first wire 122. Especially, the wire width of the first section of the conductive connecting region 126 is 2.5∼6 times the wire width of the first section of the first wire 122. The line A-A' is substantially parallel to the first direction D1, which indicates the normal vector of the first section is substantially parallel to the second direction D2. FIG. 2B is a schematic sectional diagram taken along the line B-B' in FIG. 1B. As shown in FIG. 2B, in this embodiment, the section taken along the line B-B' is regarded as a second section, and the wire width of the second section of the conductive connecting region 126 is substantially greater than the wire width of the second section of the second wire 123. Especially, the wire width of the second section of the conductive connecting region 126 is 2.5∼6 times the wire width of the second section of the second wire 123. The line B-B' is substantially parallel to the second direction D2, which indicates the normal vector of the second section is substantially parallel to the first direction D1. As mentioned above, for the section of the same direction, the wire width of the conductive connecting region is greater than that of the wire, and the normal vector of the section is substantially parallel to the extending direction of the wire.

Besides, in the different embodiments, the width of the first section of the conductive connecting region 126 can be 2.5∼5 times the width of the first section of the first wire 122, or the width of the second section of the conductive connecting region 126 can be 2.5∼5 times the width of the second section of the second wire 123, or the width of the first section of the conductive connecting region 126 can be 3-4 times the width of the first section of the first wire 122, or the width of the second section of the conductive connecting region 126 can be 3-4 times the width of the second section of the second wire 123.

In this embodiment, by the first wire 122, the second wire 123, the intersection 124 and the protrusion 125 forming the conductive connecting region 126, the conductive mesh pattern 12 made by the electrically conducive material not only can effectively reduce the whole impedance but also can reduce the signal attenuation during the transmission, and also can effectively replace the ITO, and therefore the manufacturing cost can be reduced and the shortage of inflexibility of the ITO can be overcome. Furthermore, the problem of the wire disconnection at the wire intersection due to the excessive etching can be avoided. Besides, the first and second wires 122 and 123 are capable of transmitting the signal of higher current, and the impedance matching can be improved.

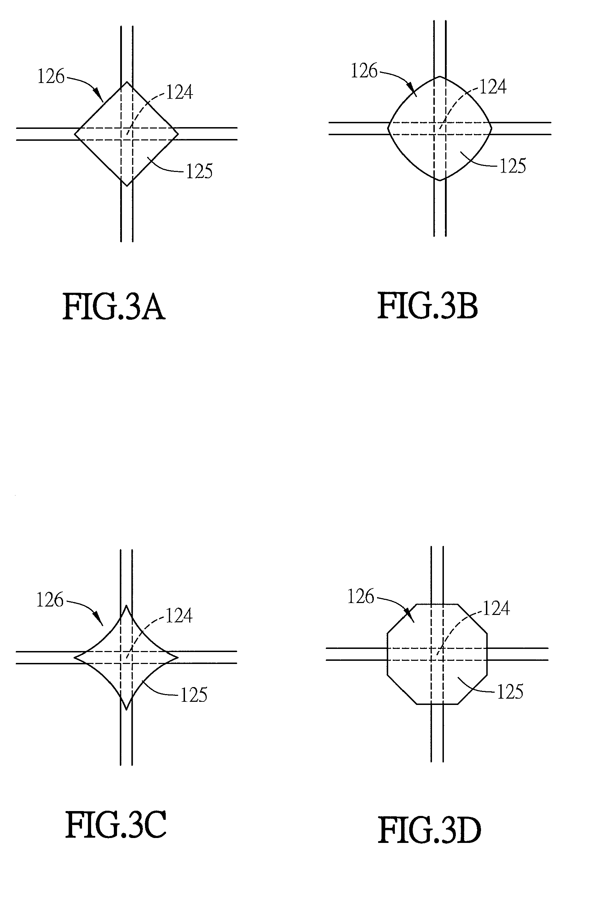

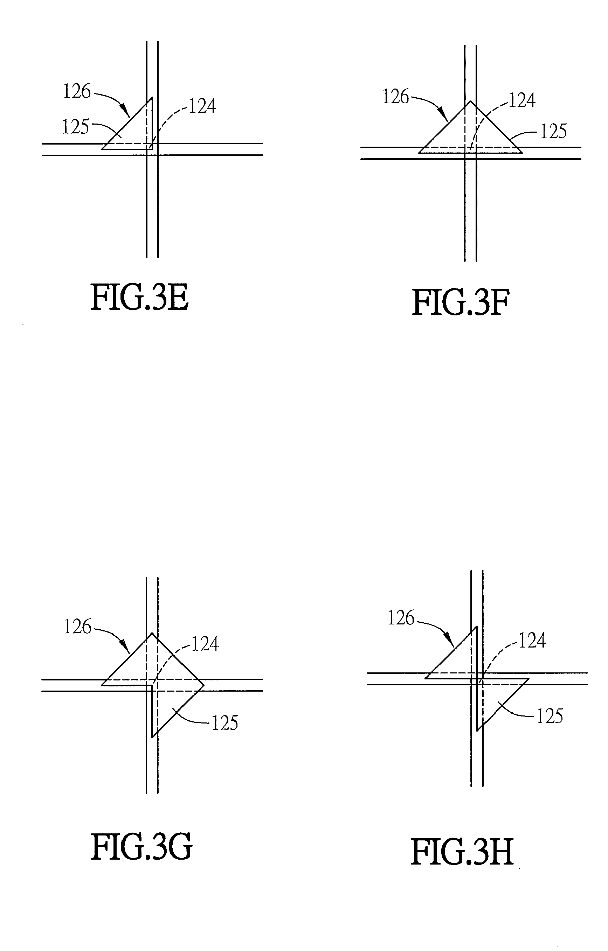

To be noted, as shown in FIGS. 1A and 1B, the protrusion 125 extended from a side of the intersection 124 is disposed around the intersection 124 for example, but the invention is not limited thereto. FIGS. 3A to 3H are schematic diagrams showing some exemplificative variations of the conductive connecting region 126. As shown in FIG. 3A, the protrusion 125 is around the intersection 124 and thus the conductive connecting region 126 has a rhombic shape or a rectangular shape. As shown in FIG. 3B, the protrusion 125 has a curved edge and is adjacent to the intersection 124 and thus the conductive connecting region 126 has a circular shape or an elliptic shape. As shown in FIG. 3C, the protrusion 125 has a concave edge. As shown in FIG. 3D, the protrusion 125 is around the intersection 124 and thus the conductive connecting region 126 has a polygonal shape. As shown in FIGS. 3E to 3H, the relative position between the protrusion 125 and the intersection 124 of the conductive connecting region 126 is varied in different ways.

According to the entire circuit layout, the requirement of the product or the adopted process, the conductive connecting regions 126 of the same conductive mesh pattern 12 of the touch panel can have different embodiments. For example, some of the conductive connecting regions 126 can be embodied as shown in FIG. 3E or 3F while the other conductive connecting regions 126 can be embodied as shown in FIG. 3C or 3D.

As shown in FIG. 2A, in this embodiment, the first section taken along the line A-A' of the conductive connecting region 126 has a lower surface S3 near the substrate 11, an upper surface S1 opposite to the lower surface S3, and a side surface S2 connecting the upper and lower surfaces S1 and S3. The upper surface S1 has a first roughness R1, the side surface S2 has a second roughness R2, and the first roughness R1 is greater than the second roughness R2. The upper surface S1 of the conductive connecting region 126 has a concave, convex, regular or irregular uneven structure, and the first roughness R1 is denoted by the perpendicular distance (height difference) between the highest and lowest points of the uneven structure of the upper surface S1 within a unit length. In this embodiment, the side surface S2 of the conductive connecting region 126 is a concave curved surface, and the second roughness R2 is not denoted by the perpendicular distance (height difference) between the highest and lowest points of the curved surface, but by the perpendicular distance (height difference) between the highest and lowest points of the uneven structure (may be concave, convex, regular or irregular) of the side surface S2 within a unit length.

In this embodiment, the first roughness R1 of the upper surface S1 and the second roughness R2 of the side surface S2 of the conductive connecting region 126 are observed and measured by using a focus ion beam (FIB) microscope having a magnification of 5000x∼50000x, and the measuring result is that the roughness R1 is less than or equal to 500nm and the roughness R2 is less than or equal to 100nm. In other embodiments, the roughness R1 is measured as less than or equal to 300nm, or less than or equal to 200nm. Besides, as shown in FIG. 2B, the first roughness R1 of the upper surface S 1 of the second section taken along the line B-B' is greater than the second roughness R2 of the side surface S2 of the second section of the conductive connecting region 126. Moreover, the first roughness R1 of the upper surface S1 of the second section has the same technical features as the first roughness of the upper surface S 1 of the first section, and is thus not described here for conciseness.

To be noted, in this embodiment, the upper surface S 1 of the conductive connecting region 126 is an uneven surface, so the adhesion of the anti-reflection layer (e.g. black layer) or protection layer (formed later) to the conductive connecting region 126 can be enhanced and the undesired reflection due to the smooth upper surface S1 can be avoided.

In addition to using the above-mentioned FIB microscope, the first roughness R1 and the second roughness R2 of the conductive connecting region 126 in other embodiments also can be measured by the scanning electron microscopy (SEM) with the magnification of 5000x∼50000x, the transmission electron microscopy (TEM) with the magnification of 5000x∼50000x, or the atomic force microscopy (AFM) with the scale of 10µm ∼ 100µm.

As shown in FIG. 2B, the wire width of the upper surface S 1 is a first wire width W21, and the wire width of the lower surface S3 is a second wire width W22. Besides, a third wire width W23 is between the upper surface S1 and the lower surface S3, and the length (width) of the third wire width W23 is less than that of the first wire width W21 and less than that of the second wire width W22. In other words, the side surface S2 of the conductive connecting region 126 is a concave curved surface that is concaved towards the position of the central axis of the first wire 122, the position of the central axis of the second wire 123, or the central position of the intersection 124. In this embodiment, the length (width) of the third wire width W23 is less than that of the first wire width W21 by more than 0.1µm and less than that of the second wire width W22 by more than 0.1µm. Besides, the first section of the conductive connecting region 126 taken along the line A-A' also has the same technical feature as the second section where the length (width) of the third wire width W23 is less than that of the first wire width W21 and less than that of the second wire width W22.

In this embodiment, because the side surface S2 of the conductive connecting region 126 has a centrally concave structure, the reflection of the light will be limited, in comparison with the case where the side surface S2 is perpendicular to the lower surface S3 or the side surface S2 is a convex surface. Moreover, in comparison with the case where the side surface S2 has a downward concave portion and the connection area between the lower surface S3 and the substrate 11 is thus decreased, this embodiment provides the larger connection area (lower surface S3) so that the problem of the conductive mesh pattern 12 easily falling off the substrate due to the insufficient connection area can be avoided.

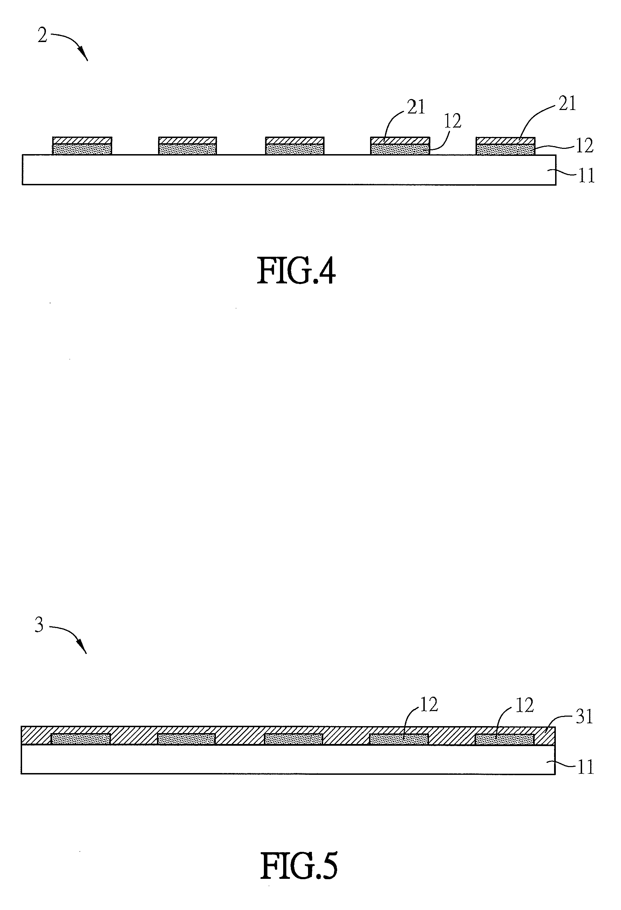

FIG. 4 is a schematic diagram of a touch panel 2 according to another embodiment of the invention. As shown in FIG. 4, mainly different from the touch panel 1, the touch panel 2 further includes an anti-reflection layer 21, which is disposed on the conductive mesh pattern 12. In this embodiment, the anti-reflection layer 21 has the same pattern as the conductive mesh pattern 12, which indicates the anti-reflection layer 21 is only disposed on the conductive mesh pattern 12. FIG. 5 is a schematic diagram of a touch panel 3 according to another embodiment of the invention. As shown in FIG. 5, mainly different from the touch panel 2, the anti-reflection layer 31 of the touch panel 3 is disposed on the substrate 11 to cover the conductive mesh pattern 12.

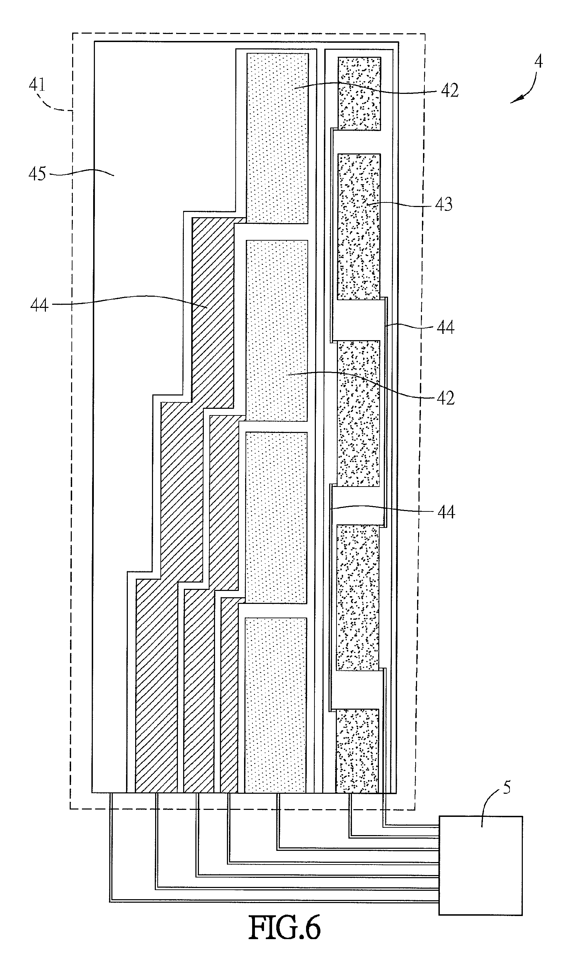

FIG. 6 is a schematic diagram of the conductive mesh pattern 41 of the touch panel 4 within a unit period according to an embodiment of the invention. As shown in FIG. 6, in this embodiment, a plurality of wire areas and a plurality of conducive connecting regions of the conductive mesh pattern 41 form a plurality of transmission electrodes 42, a plurality of sensing electrodes 43 and a plurality of transmission lines 44. The wire areas and the conductive connecting regions further form a plurality of grounding electrodes 45, which are disposed between the transmission electrodes 42 and the sensing electrodes 43. Therefore, the transmission electrodes 42 and the sensing electrodes 43 have the technical features of the above-mentioned conductive mesh pattern 12.

The transmission electrodes 42 are disposed in a one-dimensional array, and the sensing electrodes 43 are disposed in a one-dimensional array. The transmission electrodes 42 are disposed adjacent to the sensing electrodes 43 and insulated from the sensing electrodes 43. The transmission electrodes 42 and the sensing electrodes 43 are electrically connected to a control unit 5 disposed on a side of the mesh pattern 41. When the user touches or clicks the touch panel 4, the transmission electrodes 42 will generate a capacitance variation signal, which is received by the sensing electrodes 43 and then transmitted to a signal processing module of the control unit 5 electrically connected to the sensing electrodes 43. Then, a coordinate signal representing the touch input can be generated by the calculation and processing. The operation of the transmission electrodes 42 and the sensing electrodes 43 can be achieved by the mutual capacitance type. In other embodiments, the operation of the transmission electrodes 42 and the sensing electrodes 43 can be achieved by the self capacitance type, which indicates the transmission electrodes 42 and the sensing electrodes 43 can sense the touch and transmit the touch signal by themselves.

Any of the above-mentioned touch panels can be combined with a display device to form a touch display device. For example, the touch panel can be disposed on the display surface of the display device, or the conductive mesh pattern is directly formed on the display surface of the display device by regarding the display surface of the display device as the substrate. Moreover, by regarding a certain layer of the display device as the substrate, the conductive mesh pattern can be directly formed on the substrate within the display device.

In summary, in the touch panel according to the invention, the conductive mesh pattern with electrical conductivity is formed on the substrate, the wires of the wire area of the conductive mesh pattern intersect to form the intersections, and a side of each of the intersections is extended to form a protrusion so that the intersection and the corresponding protrusion can form a conductive connecting region. Thereby, the signal attenuation during the transmission can be reduced and the touch input position can be thus determined precisely and rapidly.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch panel, comprising:
a substrate; and
a conductive mesh pattern disposed on the substrate and comprising:
a wire area having a plurality of wires, wherein the wires intersect along a first direction and a second direction to form a plurality of intersections, a side of each of the intersections is extended to form a protrusion, and the intersection and the protrusion form a conductive connecting region,
for the section of the same direction, the width of the conductive connecting region is greater than the width of the wire, and the normal vector of the section is substantially parallel to the extending direction of the wire.

2. The touch panel as recited in claim 1, wherein for the section of the same direction, the wire width of the conductive connecting region is 2.5∼6 times the wire width of the wire.

3. The touch panel as recited in claim 1, wherein the conductive connecting region has a lower surface near the substrate, an upper surface opposite to the lower surface, and a side surface connecting the upper and lower surfaces, the upper surface has a first roughness, the side surface has a second roughness, the first roughness is greater than the second roughness.

4. The touch panel as recited in claim 3, wherein the first roughness is denoted by the height difference between the highest and lowest points of the upper surface within a unit length, and the second roughness is denoted by the height difference between the highest and lowest points of the side surface within a unit length.

5. The touch panel as recited in claim 1, which further includes an anti-reflection layer disposed on the conductive mesh pattern.

6. The touch panel as recited in claim 1, wherein the conductive connecting region has a lower surface near the substrate and an upper surface opposite to the lower surface, for the section, the wire width of the upper surface is a first wire width, the wire width of the lower surface is a second wire width, a third wire width is between the upper surface and the lower surface, and the third wire width is less than the first wire width and less than the second wire width.

7. A touch panel, comprising:
a substrate; and
a conductive mesh pattern disposed on the substrate and comprising:
a wire area having a plurality of wires, wherein the wires intersect along a first direction and a second direction to form a plurality of intersections, a side of each of the intersections is extended to form a protrusion, and the intersection and the protrusion form a conductive connecting region,
the conductive connecting region has a lower surface near the substrate, an upper surface opposite to the lower surface, and a side surface connecting the upper and lower surfaces, the upper surface has a first roughness, the side surface has a second roughness, the first roughness is greater than the second roughness, the first roughness is denoted by the height difference between the highest and lowest points of the upper surface within a unit length, and the second roughness is denoted by the height difference between the highest and lowest points of the side surface within a unit length.

8. The touch panel as recited in claim 7, wherein the roughness is less than or equal to 500nm.

9. The touch panel as recited in claim 7, wherein for the section of the same direction, the wire width of the conductive connecting region is greater than that of the wire, and the normal vector of the section is substantially parallel to the extending direction of the wire.

10. The touch panel as recited in claim 9, wherein for the section of the same direction, the wire width of the conductive connecting region is 2.5∼6 times the wire width of the wire.

11. The touch panel as recited in claim 7, wherein for the section of the conductive connecting region, the wire width of the upper surface is a first wire width, the wire width of the lower surface is a second wire width, a third wire width is between the upper surface and the lower surface, and the third wire width is less than the first wire width and less than the second wire width.

12. A touch panel, comprising:
a substrate; and
a conductive mesh pattern disposed on the substrate and comprising:
a wire area having a plurality of wires, wherein the wires intersect along a first direction and a second direction to form a plurality of intersections, a side of each of the intersections is extended to form a protrusion, and the intersection and the protrusion form a conductive connecting region,
the conductive connecting region has a lower surface near the substrate, an upper surface opposite to the lower surface, and a side surface connecting the upper and lower surfaces, for a section of the conductive connecting region, the wire width of the upper surface is a first wire width, the wire width of the lower surface is a second wire width, a third wire width is between the upper surface and the lower surface, and the third wire width is less than the first wire width and less than the second wire width.

13. The touch panel as recited in claim 12, wherein the third wire width is less than the first wire width by more than 0.1 µm and less than the second wire width by more than 0.1µm.

14. The touch panel as recited in claim 12, wherein for the section of the same direction, the wire width of the conductive connecting region is greater than that of the wire, and the normal vector of the section is substantially parallel to the extending direction of the wire.

15. The touch panel as recited in claim 14, wherein for the section of the same direction, the wire width of the conductive connecting region is 2.5∼6 times the wire width of the wire.

16. The touch panel as recited in claim 12, wherein the upper surface has a first roughness, the side surface has a second roughness, the first roughness is greater than the second roughness, the first roughness is denoted by the height difference between the highest and lowest points of the upper surface within a unit length, and the second roughness is denoted by the height difference between the highest and lowest points of the side surface within a unit length.
